# EUROPÄISCHE PATENTANMELDUNG

(11) **EP 0 684 286 A1**
(43) Veröffentlichungstag der Anmeldung: **29.11.1995**
(21) Anmeldenummer: 95107466.5
(22) Anmeldetag: 17.05.1995
(51) Int. Cl.: C08L 75/04, C08J 3/03

(54) **Thermokoagulierbare wässerige Polyurethan-Dispersionen**

(30) Priorität: 25.05.1994 DE 4418157
(71) Anmelder: BASF Aktiengesellschaft, D-67063 Ludwigshafen (DE)
(72) Erfinder: Licht, Ulrike, Dr., D-68163 Mannheim (DE); Seibert, Horst, D-67136 Fussgönheim (DE); Hummerich, Rainer, Dr., D-67551 Worms (DE)

(57) **Zusammenfassung**

Thermokoagulierbare wässerige Polyurethan-Dispersion, enthaltend, bezogen auf den Feststoffgehalt
a) 70 bis 99 Gew.-% eines anionische Gruppen tragenden wasserdispergierbaren Polyurethans (Komponente a) und
b) 1 bis 30 Gew.-% eines vollständig quaternisierten mit Poly-(C₂- bis C₄-alkylenglycol)-Gruppen N-substituierten Poly-(C₂- bis C₄-alkylen)-polyamins mit 2 bis 20 Aminoalkylengruppen (Komponente b). Sie können als Binde-, Beschichtungs- oder Klebemittel sowie zur Herstellung von Folien und Membranen verwendet werden.

## Beschreibung

Die Erfindung betrifft neuartige thermokoagulierbare wässerige Polyurethan-Dispersionen enthaltend bezogen auf den Feststoffgehalt
a) 70 bis 99 Gew.-% eines anionische Gruppen tragenden wasserdispergierbaren Polyurethans (Komponente a) und
b) 1 bis 30 Gew.-% eines vollständig quaternisierten mit Poly-(C₂- bis C₄-alkylenoxid)-Gruppen N-substituierten Poly-(C₂- bis C₄-alkylen)-polyamins mit 2 bis 20 Aminoalkylengruppen (Komponente b).

Weiterhin betrifft die Erfindung Verfahren zu deren Herstellung sowie die Verwendung der Dispersionen als Klebstoffe, Beschichtungsmittel sowie zur Herstellung von Folien und Membranen.

Es ist allgemein bekannt, daß wässerige Polymerdispersionen, die ein geeignetes Thermosensibilisierungsmittel enthalten, bei Erwärmen auf eine definierte Temperatur innerhalb kurzer Zeit nahezu vollständig koagulieren. Derartige Dispersionen werden beispielsweise zur Herstellung von Lacken, Kunstleder, Hohlkörpern wie Handschuhen, Faserverbundstoffen oder als Klebstoffe eingesetzt.

An thermokoagulierbare Dispersionen werden vielfältige und zum Teil divergierende Anforderungen hinsichtlich der Verarbeitungseigenschaften gestellt. Die thermokoagulierbaren Dispersionen sollen sich ohne zu koagulieren über längere Zeit lagern lassen, auch wenn sie bei der Lagerung Temperaturschwankungen ausgesetzt sind. Andererseits soll jedoch die Koagulationstemperatur in vielen Anwendungsbereichen möglichst niedrig liegen. Damit die Temperaturdifferenz zwischen Koagulationstemperatur und der maximalen Lagertemperatur, bei der noch keine Koagulation auftritt, möglichst gering ist, ist eine schnelle Koagulation in einem engen Temperaturintervall wünschenswert. Außerdem sollte sich die Koagulationstemperatur während der Lagerung nicht ändern. Zudem sollten die Eigenschaften der aus den Dispersionen hergestellten Filme durch den Thermosensibilisator möglichst wenig beeinflußt werden. Insbesondere sollen die mechanischen Eigenschaften der Filme möglichst nicht verschlechtert und die Empfindlichkeit gegenüber Feuchtigkeit nicht erhöht werden.

Thermosensibilisierungsmittel, mit denen sich thermokoagulierbare Polyolefindispersionen herstellen lassen, sind allgemein bekannt, z.B. Polyvinylalkylether, wasserlösliche Polyacetale, oxalkylierte Polysiloxane, alkoxylierte Polyamine und Polyether-Polyurethan-Harnstoffe.

Die DE-A 31 14 091 beschreibt die Verwendung von vollständig quaternisierten mit Polyalkylenoxid-Gruppen substituierten Polyalkylenaminen zur Thermokoagulation von Polyolefindispersionen.

Für den gleichen Zweck werden in der DE-A 28 37 314 Polyamin-Derivate, die erhältlich sind, indem man mit Polyalkylenoxid-Gruppen substituierte Polyalkylenamine mit stöchiometrischen oder unterstöchiometrischen Mengen von Polyisocyanaten umsetzt, oder die entsprechenden quaternären oder sauren Ammoniumsalze dieser Polyamin-Derivate empfohlen.

Für Polyurethan-Dispersionen ist folgendes bekannt: Die DE-A 36 22 612 offenbart, daß sich anionische Gruppen tragende Polyurethan-Dispersionen, die die oben genannten Thermosensibilisatoren enthalten, nicht thermokoagulieren lassen oder sofern sie thermokoagulierbar sind, die anwendungstechnischen Eigenschaften noch verbesserungsbedürftig sind. Beispielsweise sind die nach der Lehre von EP-A 167 189 aus Mischungen von anionischen Polyurethanen und den in der DE-A 28 37 314 beschriebenen Polyamin-Derivaten durch Thermokoagulation hergestellten Überzüge wasserempfindlich und die für die Thermokoagulation erforderliche Temperatur ist für viele Anwendungsgebiete zu hoch. Zudem müssen die Mischungen auf einen definierten, sauren pH-Wert eingestellt werden. Dies ist jedoch bei vielen Dispersionen von Polyurethanen, die mit Carboxylat-Gruppen stabilisiert sind, nicht möglich, ohne daß bei der Säurezugabe, auch bei Verwendung verdünnter Säuren, an der Eintropfstelle Koagulat gebildet wird. Zudem werden häufig Dispersionen mit einem neutralen pH-Wert gewünscht, z.B. wenn die Dispersionen säureempfindliche Pigmente enthalten sollen oder die Beschichtung von säureempfindlichen Untergründen mit den Dispersionen vorgenommen werden soll.

Die in der DE-A 36 22 612 stattdessen empfohlenen thermokoagulierbaren anionischen Polyurethan-Dispersionen enthalten mehrwertige Kationen wie Erdalkaliionen und als Stabilisator Polyetherpolyurethane. Nachteilig an diesen Dispersionen ist allerdings, daß das anwendungstechnische Profil des Polyurethans durch die zugesetzten mehrwertigen Kationen relativ stark beeinflußt wird und ebenfalls ein Ansäuern der Dispersion erforderlich ist.

Aus der US-A 4 366 192 sind thermokoagulierbare anionische Gruppen tragende Dispersionen bekannt, die als Thermosensibilisatoren Silicofluoride enthalten, die in der Wärme Säure abspalten. Diese Dispersionen sind jedoch wegen ihres hohen Gehaltes an toxischen Fluoridionen für viele Anwendungen nicht akzeptabel.

Die Aufgabe der vorliegenden Erfindung lag daher in der Bereitstellung von thermokoagulierbaren anionische Gruppen tragenden Polyurethandispersionen, die die Mängel des Standes der Technik nicht aufweisen. Insbesondere sollte bei einem insgesamt günstigen Eigenschaftsprofil das ungünstige Ansäuern vermieden werden.

Demgemäß wurden die eingangs definierten thermokoagulierbaren wässerigen Polyurethan-Dispersionen, Verfahren zu deren Herstellung sowie die Verwendung dieser Dispersionen zur Herstellung von Beschichtungsmitteln, Schaumstoffen, Folien, und Membranen gefunden.

Die erfindungsgemäßen thermokoagulierbaren wässerigen Polyurethan-Dispersionen haben vorteilhafterweise einen Feststoffgehalt von 20 bis 65, bevorzugt von 30 bis 50 Gew.-%.

Die anionischen Polyurethandispersionen, die als Komponente (a) in Betracht kommen, sind allgemein bekannt und beispielsweise in der DE-A 14 95 745, 26 45 779, 39 03 538, 41 37 661 und 42 19 418 sowie Kunststoff Handbuch Bd. 7, 3. Auflage, 1993, S. 30 und 31 beschrieben.

Das anionische Gruppen tragende Polyurethan (Komponete a) ist im allgemeinen aufgebaut aus
a₁) mehrwertigen aliphatischen, cycloaliphatischen, araliphatischen oder aromatischen Isocyanaten mit 4 bis 30 C-Atomen, die keine (potentiell) anionische Gruppen tragen
a₂) nicht-aromatischen Diolen, die keine (potentiell) anionische Gruppen tragen,
a₃) gegebenenfalls weiteren von den Monomeren (a₂) verschiedenen mehrwertigen Verbindungen mit reaktiven Gruppen, bei denen es sich um alkoholische Hydroxylgruppen oder primäre oder sekundäre Aminogruppen handelt, wobei diese Verbindungen keine (potentiell) anionische Gruppen tragen
a₄) Monomere mit wenigstens einer Isocyanatgruppe oder wenigstens einer gegenüber Isocyanatgruppen reaktiven Gruppe, die darüberhinaus wenigstens eine (potentiell) anionische Gruppe tragen, wodurch die Wasserdispergierbarkeit der Polyurethane (a) bewirkt wird.

Als Monomere (a₁) kommen die üblicherweise in der Polyurethanchemie eingesetzten Polyisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4-Diisocyanato-diphenylmethan, p-Xylylendiisocyanat, die Isomeren des Bis-(4-isocyanatocyclohexyl)methan wie das trans/trans-, das cis/cis- und das cis /trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 20 mol-% 2,4 Diisocyanatotoluol und 80 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 0,2 : 1 bis 4 : 1 beträgt.

Als Verbindungen (a₁) kann man auch Isocyanate einsetzen, die neben den freien Isocyanatgruppen weitere verkappte Isocyanatgruppen, z.B. Uretdion- oder Urethangruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere (a₁). Die Monoisocyanate tragen üblicherweise weitere funktionelle Gruppen wie hydrophile Gruppen, olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α, α-dimethylbenzylisocyanat (TMI).

Um Polyurethane mit einem gewissen Verzweigungs- oder Vernetzungsgrad herzustellen, können z.B. dreiwertige und vierwertige Isocyante eingesetzt werden. Derartige Isocyanate werden z.B. erhalten, indem man einen Teil der Isocyanatgruppen von zweiwertigen Isocyanaten zu Allophanat-, Biuret- oder Isocyanurat-Gruppen derivatisiert (vgl. Kunststoff-Handbuch, Band 7, 3. Auflage, S. 94-96). Handelsübliche Verbindungen sind beispielsweise das Isocynurat des Hexamethylendiisocyanats.

Im Hinblick auf gute Filmbildung und Elastizität kommen als Monomere (a₂) vornehmlich höhermolekulare Diole (a_{2.1}) in Betracht, die ein Molekulargewicht von etwa 500 bis 5000, vorzugsweise von etwa 100 bis 3000 g/mol haben.

Bei den Monomeren (a_{2.1}) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren.

Als mehrwertige Alkohole kommen z.B. Ethylenglykol, Propan-1,2-diol, Propan-1,3-diol, Butan-1,4-diol, Butan-1,3-diol, Buten-1,4-diol, Butin-1,4-diol, Pentan-1,5-diol, Hexan-1,6-diol, Octan-1,8-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen z.B. epsilon-Caprolacton, β-Propiolacton, gamma-Butyrolacton und/oder Methyl-epsilon-caprolacton sowie deren Gemische in Betracht. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (a_{2.1}) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich.

Die Polyesterdiole und Polyetherdiole können auch als Gemische im Verhältnis 0,1 : 1 bis 1 : 9 eingesetzt werden.

Die Härte und der Elastizitätsmodul der Polyurethane läßt sich erhöhen, wenn als Monomere (a₂) neben den Monomeren (a_{2.1}) noch niedermolekulare Diole (a_{2.2}) mit einem Molekulargewicht von etwa 50 bis 500, vorzugsweise von 60 bis 200 g/mol, eingesetzt werden.

Als Monomere (a_{2.2}) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen bevorzugt werden.

Bevorzugt beträgt der Anteil der Monomere (a_{2.1}), bezogen auf die Gesamtmenge der der Monomere (a₂) 10 bis 100 mol-% und der Anteil der Monomere (a_{2.2}), bezogen auf die Gesamtmenge der Monomere (a₂) 0 bis 90 mol-%. Besonders bevorzugt beträgt das molare Verhältnis der Monomere (a_{2.1}) zu den Monomeren (a_{2.2}) 0,2 : 1 bis 5: 1, ganz besonders bevorzugt 0,5 : 1 bis 2 : 1.

Ferner können zum Kettenabbruch in untergeordneten Mengen, d.h. bevorzugt in Mengen von weniger als 10 mol-%, bezogen auf die Monomere (a₂) und (a₃), Monoalkohole eingesetzt werden. Ihre Funktion ist im allgemeinen ähnlich wie die der Monoisocyanate, d.h. sie dienen hauptsächlich zur Funktionalisierung des Polyurethans. Beispiele sind Ester von Acryl- oder Methacrylsäure wie Hydroxyethylacrylat oder Hydroxyethylmethacrylat.

Als Monoalkohole mit nichtionischen hydrophilen Gruppen kommen insbesondere Polyalkylenoxide aus vorzugsweise 5 bis 100, bevorzugt 10 bis 80 Alkylenoxid-Wiederholungseinheiten, in Betracht, die üblicherweise durch Anlagerung von Alkylenoxiden wie Ethylenoxid oder Propylenoxid an Monoalkohole, bevorzugt aliphatische C₁- bis C₄-Monoalkohole hergestellt werden.

Die Monomere (a₃) dienen im allgemeinen der Vernetzung oder der Kettenverlängerung und tragen keine (potentiell) anionischen Gruppen.

Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit mindestens 2 gegenüber Isocyanaten reaktiven Aminogruppen wie Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich ist, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet.

Die Polyurethane enthalten bevorzugt 0,1 bis 10, besonders bevorzugt 4 bis 8 mol-%, bezogen auf die Gesamtmenge der Monomere (a₂) und (a₃) ein Polyamin mit mindestens 2 gegenüber Isocyanaten reaktiven Aminogruppen als Monomere (a₃).

Um die Wasserdispergierbarkeit der Polyurethane zu erreichen, enthalten sie Monomere (a₄) mit anionischen Gruppen oder Gruppen, die sich in anionische Gruppen überführen lassen (im folgenden kurz: "potentiell anionische Gruppen") und die mit Isocyanaten wesentlich langsamer reagieren als die funktionellen Gruppen der Monomere, die zum Aufbau der Polymerhauptkette dienen. Alkoholische Hydroxylgruppen, primäre und sekundäre Aminogruppen zählen deshalb nicht zu den (potentiell) anionischen Gruppen. Der Anteil der Monomeren (a₄) mit (potentiell) anionischen Gruppen an der Gesamtmenge der Monomere (a₁), (a₂), (a₃) und (a₄) wird im allgemeinen so bemessen, daß die Molmenge der (potentiell) anionischen Gruppen, bezogen auf die Gewichtsmenge aller Monomere (a₁), (a₂), (a₃) und (a₄), 30 bis 1000, bevorzugt 50 bis 500 und besonders bevorzugt 80 bis 300 mmol/kg beträgt.

Anionische Gruppen sind vor allem Gruppen wie die Sulfonat-, die Carboxylat- und die Phosphatgruppe in Form ihrer Alkalimetall- oder Ammoniumsalze.

Potentiell anionische hydrophile Gruppen sind vor allem solche, die sich durch Neutralisations-, oder Hydrolysereaktionen in die oben genannten anionischen hydrophilen Gruppen überführen lassen, also z.B. Carbonsäuregruppen oder Anhydridgruppen.

Von Bedeutung sind vor allem Monomere (a₄) mit Carboxylatgruppen. Es kommen z.B. aliphatische, cycloaliphatische, araliphatische oder aromatische Mono- und Dihydroxycarbonsäuren in Betracht. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel 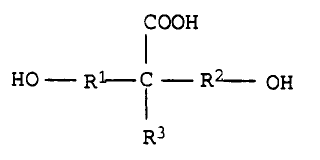
in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Insbesondere sind Dihydroxylverbindungen mit einem Molekulargewicht über 500 bis 10000 g/mol mit mindestens 2 Carbonsäure- oder Carboxylatgruppen aus der DE-A 3 911 827 bekannt. Sie sind durch Umsetzung von Dihydroxylverbindungen mit Tetracarbonsäuredianhydriden wie Pyromellitsäuredianhydrid oder Cylopentantetracarbonsäuredianhydrid im Molverhältnis 1,05 : 1 bis 2 : 1 in einer Polyadditionsreaktion erhältlich. Als Dihydroxylverbindungen sind insbesondere die als Kettenverlängerer aufgeführten Monomere (a_{2.2}) geeignet.

Als Monomere (a₄) mit gegenüber Isocyanaten reaktiven Aminogruppen kommen Aminocarbonsäuren wie Lysin, β-Alanin, die in der DE-A 2 034 479 genannten Addukte von aliphatischen diprimären Diaminen an α,β-ungesättigte Carbonsäuren wie die N-(2-Aminoethyl)-2-aminopropancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Weiterhin eignen sich entsprechende Dihydroxysulfonsäuren, insbesondere N-(Aminoalkyl)-aminoalkylsulfonsäuren wie N-(2-Aminoethyl)-2-aminopropansulfonsäure und Dihydroxyphospsäuren wie 2,3-Dihydroxypropanphosphonsäure sowie die Alkali- oder Ammoniumsalze dieser Säuren.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen.

Auf dem Gebiet der Polyurethanchemie ist allgemein bekannt, wie das Molekulargewicht der Polyurethane durch Wahl der Anteile der miteinander reaktiven Monomere (A) und (B) sowie dem arithmetischen Mittel der Zahl der reaktiven funktionellen Gruppen pro Molekül eingestellt werden kann.

Normalerweise werden die Monomere (a₁), (a₂), (a₃) und (a₄) sowie ihre jeweiligen Molmengen so gewählt, daß das Verhältnis A : B mit
A) der Molmenge an Isocyanatgruppen und
B) der Summe aus den Molmengen der alkoholischen Hydroxylgruppen und der Molmenge der primären und sekundären Aminogruppen
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Neben den Monomeren (a₁), (a₂), (a₃) und (a₄) werden Monomere mit nur einer reaktiven Gruppe im allgemeinen in Mengen bis zu 15 mol-%, bevorzugt bis zu 8 mol-%, bezogen auf die Gesamtzahl der Monomeren (a₁), (a₂), (a₃) und (a₄) eingesetzt.

Die Umsetzung der Monomere (a₁) bis (a₄) erfolgt im allgemeinen bei Reaktionstemperaturen von 20 bis 180°C, bevorzugt 50 bis 150°C unter Normaldruck oder einem Druck bis 10 bar.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist. Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Meistens werden die Dispersionen nach einem der folgenden Verfahren hergestellt:

Nach dem "Acetonverfahren" wird in einem mit Wasser mischbaren und bei Normaldruck unter 100 °C siedenden Lösungsmittel aus den Monomeren (a₁) bis (a₄) ein anionisches Polyurethan hergestellt. Es wird soviel Wasser zugegeben, bis sich eine Dispersion bildet, in der Wasser die kohärente Phase darstellt. Anschließend wird das Lösungsmittel abdestilliert.

Das "Präpolymer-Mischverfahren" unterscheidet sich vom Acetonverfahren darin, daß nicht ein ausreagiertes (potentiell) anionisches Polyurethan, sondern zunächst ein Präpolymer hergestellt wird, das Isocyanat-Gruppen trägt. Die Monomeren (a₁) bis (a₄) werden hierbei so gewählt, daß das definitionsgemäße Verhältnis A : B größer 1,0 bis 2, bevorzugt 1,05 bis 1,5 beträgt. Das Präpolymer wird zuerst in Wasser dispergiert und anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Hydrophobe Hilfsmittel, die unter Umständen nur schwierig homogen in der fertigen Dispersion zu verteilen sind wie beispielsweise Phenol-Kondensationharze aus Aldehyden und Phenol bzw. Phenolderivaten oder Epoxidharze und weitere z.B. in der DE-A 39 03 538 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Die Komponente (b) ist ein vollständig quaterniertes mit Poly-(C₂- bis C₄-alkylenoxid)-Resten N-substituiertes Poly-(C₂- bis C₄-alkylen)-polyamin mit 2 bis 20 Aminoalkylengruppen.

Die Polyalkylenoxid-Reste können zu 100 % aus Einheiten bestehen, die sich nur von einem C₂- bis C₄-Alkylenoxid ableiten, wobei Ethylenoxid und Propylenoxid bevorzugt sind. Besonders bevorzugt sind Polyalkylenoxid-Reste, die sowohl aus Einheiten, die von Ethylenoxid als auch aus Einheiten, die von Propylenoxid abgeleitet sind, bestehen. Das Verhältnis der vom Ethylenoxid abgeleiteten Einheiten zu den vom Propylenoxid abgeleiteten Einheiten beträgt 0,2 : 1 bis 5 : 1, bevorzugt 0,5 : 1 bis 1 : 1 .

Diese Polyammoniumsalze sind mit Anionen neutralisiert, die sich im allgemeinen von starken organischen oder anorganischen Säuren mit einer Säurekonstante, deren negativer dekadischer Logarithmus größer als -10 und bevorzugt kleiner als 3 ist, ableiten. Beispiele für derartige Säuren sind die Halogenwasserstoffsäuren wie Chlor- Brom- und Iodwasserstoffsäure sowie Schwefelsäure, Perchlorsäure, Tetrafluoroborsäure und C₁- bis C₂₀-Alkylsulfonsäuren wie Methansulfonsäure.

Bevorzugt sind Komponenten (b) der Formel 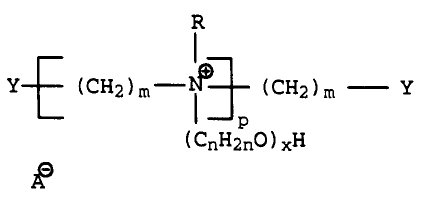
in der
- m: 2 oder 3
- n: 2 bis 4
- p: 1 bis 20, bevorzugt 3 bis 6
- x: 5 bis 100, bevorzugt 10 bis 20
- R: ein C₁- bis C₂₀-, bevorzugt ein C₁- bis C₆-Alkylrest, ein C₅- bis C₁₀-Cycloalkylrest und/oder ein araliphatischer Rest mit 6 bis 10 C-Atomen, bevorzugt ein Benzylrest, bei denen 1 bis 3 Wasserstoffatome durch inerte Gruppen wie Nitro- oder Alkoxygruppen mit bis zu 4 C-Atomen ersetzt sein können
- Y: 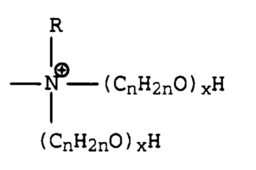
und
- A^{⊖}: ein Anion, das sich von einer der oben genannten starken Säuren ableitet,
bedeutet.

Die Komponenten (b) sind an sich bekannt und deren Herstellung ist beispielsweise in der DE-A 24 35 713 beschrieben.

Sie werden im allgemeinen hergestellt, indem man
I. ein Poly-(C₂- bis C₄-alkylen)-polyamin mit 2 bis 20 Aminoalkylengruppen mit C₂- bis C₄-Alkylenoxiden oxalkyliert und
II. das entsprechende oxalkylierte Polyamin in einer polymeranalogen Quaternisierungsreaktion in das vollständig quaternisierte Polyamin (b) überführt.

Bevorzugte Ausgangsverbindungen sind Polyamine wie Diethylentriamin, Dipropylentriamin, Triethylentetramin, Tripropylentetramin, Tetraethylenpentamin, Tetrapropylenpentamin sowie Polyethylenimine mit 6 bis 10 Aminoethyleinheiten. Diese werden mit Alkylenoxiden wie Ethylenoxid, Propylenoxid und Butylenoxid oxalkyliert, wobei die Alkylenoxide sowohl in reiner Form als auch in Form ihrer Gemische eingesetzt werden können. Besonders bevorzugt sind Gemische von Ethylenoxid und Propylenoxid im Verhältnis 0,2 : 1 bis 5 : 1, und vor allem 0,5 : 1 bis 1 : 1.

Die Oxalkylierung kann in einer oder in mehreren Stufen durchgeführt werden. Sofern in mehreren Stufen oxalkyliert wird, ist es möglich, in verschiedenen Stufen verschiedene Alkylenoxide einzusetzt, so daß man Polyamine erhält, die mit Polyalkylenoxidresten substituiert sind, die aus verschiedenen Polyalkylenoxid-Blöcken zusammengesetzt sind.

Die Oxalkylierung der Polyamine erfolgt bevorzugt in Gegenwart von 1 bis 50 Gew.-% Wasser, bezogen auf die Gesamtmenge an Polyamin, bei Temperaturen von 80 bis 140 °C unter Anwendung von Druck.

Geeignete Katalysatoren sind Basen wie Alkalihydroxide oder Alkoholate.

Die oxalkylierten Polyamine werden in an sich bekannter Weise in einer polymeranalogen Reaktion vollständig quaternisiert. Geeignete Quaternisierungsmittel sind beispeilsweise die Halogenide, insbesondere die Chloride, und Bromide sowie Sulfate mit einem C₁- bis C₂₀-, bevorzugt einem C₁- bis C₆-Alkylrest, einem C₅- bis C₁₀-Cycloalkylrest oder einem araliphatischen Rest mit 6 bis 10 C-Atomen, bevorzugt einem Benzylrest. Bei diesen Resten können 1 bis 3 Wasserstoffatome durch inerte Gruppen wie Nitro- oder Alkoxygruppen ersetzt sein. Besonders bevorzugt ist als Quaternisierungsmittel Dimethylsulfat.

Im allgemeinen sind bereits Anteile von 1 bis 30, bevorzugt von 10 bis 20 Gew.-% der Komponente (b) in den erfindungsgemäßen thermokoagulierbaren wässerigen Polyurethan-Dispersionen, bezogen auf den gesamten Feststoffgehalt der Komponenten (a) und (b), als Thermosensibilisator wirksam.

Die thermokoagulierbaren wässerigen Polyurethan-Dispersionen lassen sich durch Vermischen durch bekannte Mischtechniken wie Rühren o.ä. der Komponenten (a) und (b) herstellen. Im allgemeinen wird man zunächst die wäßrige Polyurethandispersion herstellen und dieser anschließend die Komponente (b) zusetzen. Praktischerweise löst man zuvor die Komponente (b) in Wasser, wobei das Gewichtsverhältnis Wasser : Komponente (b) 0,5 : 1 bis 4 : 1 beträgt.

Der pH-Wert der Mischung wird im wesentlichen vom Ausgangs-pH-Wert der Polyurethandispersion bestimmt. Er liegt im allgemeinen bei 3 bis 10. Üblicherweise werden Dispersionen mit einem pH-Wert von 4 bis 9 und besonders mit einem neutralen pH-Wert, d.h. 6 bis 8, bevorzugt.

Neben den Komponenten (a) und (b) können die thermokoagulierbaren Polyurethan-Dispersionen weitere handelsübliche Hilfs- und Zusatzstoffe wie Treibmittel, Verdickungsmittel und Thixotropiermittel, Farbmittel wie Farbstoffe und Pigmente enthalten.

Die erfindungsgemäßen Dispersionen können auch mit anderen anionisch oder nichtionisch stabilisierten Dispersionen von Homo- oder Copolymeren von z.B. Acryl- oder Methacrylsäureestern, Styrol oder Butadien im Verhältnis 0,2 : 1 bis 8 : 1 abgemischt werden.

Weiterhin können den erfindungsgemäßen Dispersionen zur Erhöhung des Molekulargewichtes der Polyurethane auch wasseremulgierbare Isocyanate, wie sie beispielsweise durch Umsetzung von Polyisocyanaten mit Poly-C₂- bis C₄-alkylenglykolen erhalten werden können (vgl. EP-A 0 206 059 und DE-A 40 36 927) zugesetzt werden.

Die Koagulation der thermokoagulierbaren wässerigen Polyurethan-Dispersionen wird erreicht, indem man sie mindestens für wenige Sekunden bis ca. 1 Minute auf Temperaturen von 30 bis 100°C erhitzt.

Die Thermokoagulierbarkeit der erfindungsgemäßen Polyurethan-Dispersionen läßt sich auf vielen Arbeitsgebieten ausnutzen. Derartige Arbeitsgebiete sind beispielsweise die Imprägnierung von Vliesstoffen und Fasermaterialien mit Bindemitteln (vgl. US 4 366 192), die Lackverarbeitung, die Textil- und Lederbeschichtung (vgl. DE-A 1 270 276), die Klebstoffverarbeitung sowie die Herstellung von Folien und Membranen, z.B. microporösen Membranen (vgl. DE-A 1 694 171 und DE-A 1 270 276) sowie synthetischem Leder (vgl. DE-A 29 31 125 und J. Hemmerich et al, Journal of Coated Fabrics, Volume 22, April 1993, Seiten 268 bis 278).

Vom jeweiligen Arbeitsgebiet hängt auch die Methode ab, auf welche Weise die Wärme der Dispersion zugeführt wird, beispielsweise in Form von IR-Strahlung, Konvektionswärme oder durch einen heißen Gasstrom.

Die erfindungsgemäßen Polyurethan-Dispersionen können auf allen Arbeitsgebieten an Stelle der vorbeschriebenen thermokoagulierbaren Polyolefin- und Polyurethandispersionen eingesetzt werden und auf analoge Weise verarbeitet werden.

Gegenstände, die sich mit den thermokoagulierbaren Polyurethandispersionen beschichten oder verkleben lassen, sind im allgemeinen aus üblichen Werkstoffen, beispielsweise Metall, Stein, Beton, Holz, Glas und diversen Kunststoffen aufgebaut.

Die erfindungsgemäßen Dispersionen sind lagerstabil und einfach verarbeitbar. Sie zeichnen sich weiterhin dadurch aus, daß sich vor der Thermokoagulation die Einstellung eines definierten sauren pH-Wertes erübrigt und daß sie auch mit einem pH-Wert im Neutralbereich thermokoaguliert werden können. Dies ist besonders bei Anwendungsgebieten vorteilhaft, bei denen die Dispersion auf Substrate aufgetragen werden oder mit Zusatzstoffen weiterverarbeitet werden, die durch ein saures oder basisches Milieu geschädigt würden. Zudem besteht bei der Zugabe von Säure zu anionisch stabilisierten Polyurethan-Dispersionen, insbesondere von mit Carboxylatgruppen stabilisierten, die Gefahr der Koagulatbildung.

Die aus den erfindungsgemäßen Dispersionen hergestellten Filme sind mechanisch hoch beanspruchbar insbesondere auch unter Feuchtigkeitseinfluß.

### Beispiele

Es wurden 2 lösungsmittelfreie Polyurethan-Dispersionen (PUR 1 und PUR 2) eingesetzt.

Die Dispersion PUR 1 entspricht Beispiel 1 der DE-A 39 03 538. Sie enthält, bezogen auf den Feststoffgehalt
- 70 Gew.-% eines Polyurethans, aufgebaut aus Hexamethylendiisocyanat und Toluylendiisocyanat (Molverhältnis 1 : 1), einem Polyesterdiol (Kondensationsprodukt aus Adipinsäure und Butandiol, Molekulargewicht 2300) und dem Na-Salz des Adduktes aus Acrylsäure und Ethylendiamin als anionische Gruppen tragendes Kettenverlängerungsmittel und
- 30 Gew.-% eines Phenol-Aldehyd-Kondensationsharzes mit einem Erweichungspunkt von 95 bis 105°C als Haftungsverbesserer.

Die Dispersion PUR 2 enthält ein Polyurethan aufgebaut aus Bis-(4-isocyanatocyclohexyl)methan und IPDI im Molverhältnis 1 : 1, als Diolkomponente ein Gemisch aus einem Polyesterdiol (Kondensationsprodukt aus Adipinsäure und Neopentylglycol/Hexandiol 1/1, Molekulargewicht 2000) und Butan-1,4-diol und als anionische Gruppen tragendes Kettenverlängerungsmittel das Na-Salz des Adduktes aus Acrylsäure und Ethylendiamin.

### Beispiel 1a (erfindungsgemäß)

Zu 100 g der Dispersion PUR 1 mit einem Feststoffgehalt von 20 Gew.-% wurden 4 g einer 50 gew.-%igen wässerigen Lösung eines mit Polyethylen- und Polypropylenoxid-Gruppen N-substituierten Polypropylenpentamins, das mit Dimethylsulfat in sein quaternäres Ammoniumsalz überführt wurde, gegeben. Die Mischung, die einen pH-Wert von 6,7 aufwies, koagulierte bei Erwärmung, bevor sie eine Temperatur von 60°C erreichte.

### Beispiel 1b (zum Vergleich)

Zu 100 g der Dispersion PUR 1 mit einem Feststoffgehalt von 20 Gew.-% wurden 4 g des Umsetzungsproduktes eines Polyalkylenoxid-Gruppen N-substituierten Polyalkylenamins und eines Diisocyanates, das in der DE-A 28 37 314 beschrieben ist (Cartafix U (R) der Firma Sandoz) gegeben. Die Mischung, die einen pH-Wert von 6,7 aufwies, koagulierte bei Erwärmung auf 80°C nicht.

### Beispiel 1c (zum Vergleich)

Das Beispiel 1b wurde wiederholt, jedoch wurde der pH-Wert der Mischung durch Zugabe von 10 gew.-%iger Essigsäure auf 4,7 eingestellt. Die Mischung koaguliert bei Erwärmung, bevor sie eine Temperatur von 60°C erreichte.

### Beispiel 2a (erfindungsgemäß)

Beispiel 1a wurde dahingehend abgewandelt, daß 100 g der Dispersion PUR 2, die einen Feststoffgehalt von 40 Gew.-% aufwies und 8 g des in Beispiel 1a beschriebenen Thermosensibilisierungsmittels eingesetzt wurden. Die Mischung, die einen pH-Wert von 7,2 aufwies, koagulierte bei Erwärmung, bevor sie eine Temperatur von 60°C erreichte. Sie ließ sich 7 d bei 40°C lagern, ohne Koagulat zu bilden.

### Beispiel 2b (zum Vergleich)

Beispiel 1b wurde dahingehend abgewandelt, daß 100 g der Dispersion PUR 2, die einen Feststoffgehalt von 40 Gew.-% aufwies und 8 g des in Beispiel 1b beschriebenen Thermosensibilisierungsmittels eingesetzt wurden. Die Mischung, die einen pH-Wert von 7,5 aufwies, koagulierte bei Erwärmung auf 80°C nicht.

### Beispiel 2c (zum Vergleich)

Beispiel 1c wurde dahingehend abgewandelt, daß 100 g der Dispersion PUR 2, die einen Feststoffgehalt von 40 Gew.-% aufwies und 8 g des in Beispiel 1b beschriebenen Thermosensibilisierungsmittels eingesetzt wurden. Die Mischung koaguliert bei Erwärmung, bevor sie eine Temperatur von 60°C erreichte.

### Herstellung einer wasserdampfdurchlässigen Textilbeschichtung

20 g/m² einer Mischung von 250 Teilen der Dispersion PUR 2 mit einem Feststoffgehalt von 40 Gew.-%, 30 Teilen des in Beispiel 1a beschriebenen Thermosensibilisierungsmittel, 14,4 Teilen eines handelsüblichen Verdickers auf Basis von alkylierter Kieselsäure und 5,0 Teilen eines wasseremulgierbaren Polyisocyanates wurden auf hydrophobisiertes Polyamidgewebe mit einem Rakel aufgetragen. Die Hydrophobisierung des Polyamidgewebes erfolgte, indem man es mit einer 0,5 gew.-%igen wässerigen Lösung einer Fluorcarbonsäure (Persistol® O der Fa. BASF AG) tränkte, in einem Foulard abquetschte und bei 120°C trocknete. Das imprägnierte Polyamidgewebe wurde anschließend mit Infrarotstrahlern innerhalb weniger Sekunden auf ca. 80°C erhitzt, wobei die Dispersion koagulierte. Danach wurde das beschichtete Polyamidgewebe mit einer 2 gew.-%igen wässerigen Lösung des Hydrophobisierungsmittels imprägniert, in einem Foulard abgequetscht und bei 150°C getrocknet.

Das imprägnierte Polyamidgewebe wies eine nach der DIN 52 122 ermittelte Wasserdampfdurchlässigkeit von 976 g/m² in 24 h auf.

## Patentansprüche

1. Thermokoagulierbare wässerige Polyurethan-Dispersion, enthaltend, bezogen auf den Feststoffgehalt
a) 70 bis 99 Gew.-% eines anionische Gruppen tragenden wasserdispergierbaren Polyurethans (Komponente a) und
b) 1 bis 30 Gew.-% eines vollständig quaternisierten mit Poly-(C₂- bis C₄-alkylenoxid)-Gruppen N-substituierten Poly-(C₂- bis C₄-alkylen)-polyamins mit 2 bis 20 Aminoalkylengruppen (Komponente b).

2. Thermokoagulierbare wässerige Polyurethan-Dispersionen nach Anspruch 1, wobei es sich bei der Komponente (b) um ein vollständig quaternisiertes Polyamin der allgemeinen Formel 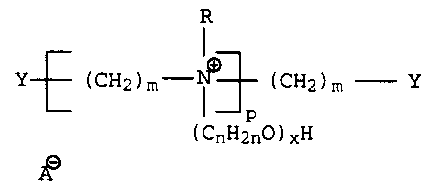 in der
m 2 oder 3
n 2 bis 4
p 1 bis 20
x 5 bis 100
R ein C₁- bis C₆-Alkylrest, ein C₅- bis C₁₀-Cycloalkylrest und/oder ein araliphatischer Rest mit 6 bis 10 C-Atomen
Y 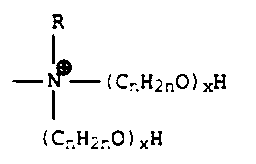
und
A^{⊖} ein Anion, das sich von einer starken Säure ableitet,
bedeutet.

3. Thermokoagulierbare wässerige Polyurethan-Dispersionen nach Anspruch 1 oder 2, wobei das anionische Gruppen tragende Polyurethan (Komponente a) im wesentlichen aufgebaut ist aus
a₁) mehrwertigen aliphatischen, cycloaliphatischen, araliphatischen oder aromatischen Isocyanaten mit 4 bis 30 C-Atomen, die keine (potentiell) anionische Gruppen tragen
a₂) nicht-aromatischen Diolen, die keine (potentiell) anionische Gruppen tragen, wovon
a_{2.1}) 10 bis 100 mol-%, bezogen auf die Gesamtmenge der Monomeren (a₂), ein Molekulargewicht von 500 bis 5000 g/mol haben und
a_{2.2}) 0 bis 90 mol-%, bezogen auf die Gesamtmenge der Monomeren (a₂), ein Molekulargewicht von 60 bis 500 g/mol haben
a₃) gegebenenfalls weiteren von den Monomeren (a₂) verschiedenen mehrwertigen Verbindungen mit reaktiven Gruppen, bei denen es sich um alkoholische Hydroxylgruppen oder primäre oder sekundäre Aminogruppen handelt, wobei diese Verbindungen keine (potentiell) anionische Gruppen tragen
a₄) Monomere mit wenigstens einer Isocyanatgruppe oder wenigstens einer gegenüber Isocyanatgruppen reaktiven Gruppe, die darüberhinaus wenigstens eine (potentiell) anionische Gruppe tragen, wodurch die Wasserdispergierbarkeit der Polyurethane (a) bewirkt wird.

4. Thermokoagulierbare wäßrige Polyurethan-Dispersion nach Anspruch 3, wobei (a₃) ein Polyamin mit mindestens 2 gegenüber Isocyanaten reaktiven Aminogruppen ist.

5. Verfahren zur Herstellung von thermokoagulierbaren wässerigen Polyurethan-Dispersionen gemäß den Ansprüchen 1 bis 4, dadurch gekennzeichnet, daß man zunächst eine wässerige Polyurethandispersion (a) herstellt und dieser anschließend die Komponente (b) zusetzt.

6. Verwendung von thermokoagulierbaren wässerigen Polyurethan-Dispersionen gemäß den Ansprüchen 1 bis 4 als Binde-, Beschichtungs-, oder Klebemittel sowie zur Herstellung von Folien und Membranen.

7. Gegenstände, die mit einer thermokoagulierbaren Polyurethan-dispersion gemäß den Ansprüchen 1 bis 4 verklebt oder beschichtet sind.
